# EUROPEAN PATENT APPLICATION

(11) **EP 2 959 781 A1**
(43) Date of publication of application: **30.12.2015**
(21) Application number: 14754352.4
(22) Date of filing: 07.02.2014
(51) Int. Cl.: A23L 1/10, A23L 1/18

(54) **INSTANT FOOD PRODUCT**

(30) Priority: 19.02.2013 JP 2013030006
(71) Applicant: Nissin Foods Holdings Co., Ltd., Osaka-shi, Osaka 532-8524 (JP)
(72) Inventor: SAEKI, Kentaro, Osaka-shi Osaka 532-8524 (JP); KOMATSU, Masashi, Osaka-shi Osaka 532-8524 (JP); TANAKA, Mitsuru, Osaka-shi Osaka 532-8524 (JP)
(74) Representative: Nieuwenhuys, William Francis
(86) International application number: PCT/JP2014/000674
(87) International publication number: WO 2014/129140

(57) **Abstract**

Disclosed herein is an instant food product containing puffed dried rice, which can be easily cooked because the surface of water in a container can be seen during pouring of hot or cold water, and therefore an appropriate amount of hot or cold water can be poured.

The instant food product is packed in a container, can be eaten simply by pouring hot water or by pouring hot or cold water and heating in a microwave, and contains puffed dried rice that sinks in water. The puffed dried rice used in the instant food product sinks in water, and therefore the surface of water in the container can be seen. The puffed dried rice that sinks in water preferably has a bulk specific gravity of 0.55 g/mL or more. The instant food product can be cooked without once taking out the dried rice from the container before cooking.

## Description

### Technical Field

The present invention relates to a rice-based instant food product that can be easily cooked simply by pouring hot water and waiting for a while or simply by pouring cold or hot water and heating in a microwave.

### Background Art

An instant rice or rice-based food product, such as instant rice, instant fried rice, or instant pilaf, is mainly classified into a retort pouch-packed type and a dried gelatinized rice type. Among them, so-called dried gelatinized rice obtained by directly drying gelatinized rice with hot air at about 100°C to a moisture content of about 5 to 10 mass% without adjusting the moisture content ofthe gelatinized rice is poor in reconstitutability even when soaked in hot water, and therefore requires a long cooking time or tends to have a hard core remaining in its grains. Further, such dried gelatinized rice contains many broken rice grains and is irregular in rice grain shape.

In order to solve these problems, PTL 1 discloses a method for producing instant rice, in which the moisture content of gelatinized (boiled or steamed) rice is adjusted, and then the gelatinized rice is dried at a high temperature to puff its tissue. In the production method disclosed in PTL 1, rice is steamed twice, then pre-dried at 100°C or lower, and then puffed with high-temperature hot air at 200 to 400°C. However, it cannot be said that instant rice produced by the method disclosed in PTL 1 is satisfactory in reconstitutability and texture, in spite of the fact that puffing and drying is performed at a very high temperature.

Further, in PTL 2 to PTL 4, there is disclosed a method in which rice grains are previously subjected to pressing (pressing and flattening) before puffed and dried with high-temperature hot air. Dried rice obtained by such a method can achieve a more satisfactory puffed state, and therefore has improved reconstitutability and texture. According to PTL 2 to PTL 4, the dried rice keeps its original shape and has improved reconstitutability. However, the dried rice is obtained by puffing pressed flattened rice at once at a high temperature, which causes a problem that the dried rice has a low bulk specific gravity, and therefore floats in water when hot or cold water is poured. When the dried rice floats in water, the surface of water cannot be seen during pouring of water due to the floating dried rice, and therefore an accurate amount of water cannot be poured.

In the case of an instant food product, especially, instant cooked rice, instant fried rice, instant pilaf, or the like that is not a soup dish and does not require draining hot water before eating, the amount of water poured needs to be accurately and easily adjusted. This is because if the amount of water is too much, rice cannot absorb all the water and becomes pasty, and on the other hand, if the amount of water is too little, rice reconstituted with hot water has a hard core remaining in its grains.

In order to solve such problems, in the case of an instant food product containing such dried rice as disclosed in PTL 1 to PTL 4, the dried rice is generally separately packed in an attached bag contained in a container. In this case, this bag is taken out of the container before cooking, and a predetermined amount of hot or cold water is poured into the container up to a waterline, and then the bag is opened and the dried rice is put into the container.

### Citation List

### Patent Literature

PTL 1: JP 46-34730 B
PTL 2: JP 51-32751 A
PTL 3: JP 51-121542 A
PTL 4: JP 52-110849 A

### Summary of Invention

### Solution to Problem

However, when such an instant food product containing dried rice separately packed in an attached bag is cooked, two processes, pouring a predetermined amount of hot or cold water into a container and then putting the dried rice contained in the bag into the container, are required which are different from the process of cooking a common instant food product. That is, it is necessary to perform processes different from the process of cooking a common instant food product, i.e., from the process of finally pouring hot water or the process of pouring cold or hot water and heating in a microwave. Therefore, cooking failure may occur if cooking instructions written on the package of the product are not carefully checked.

Further, when many of the grains of the dried rice do not sink in water, it is difficult to check the amount of hot water poured. In addition to that, the floating dried rice grains are not sufficiently reconstituted, which results in non-uniform cooking. Further, in the case of an instant food product such as instant seasoned rice boiled with other ingredients or instant fried rice, ingredients are placed under rice after cooking, and therefore the product is poor in appearance during eating.

It is an object ofthe present invention to provide an instant food product using puffed dried rice, which can be eaten by directly pouring hot water on the puffed dried rice contained in a container before eating or by pouring cold or hot water and heating in a microwave before eating.

### Solution to Problem

The present invention is directed to an instant food product that is packed in a container and can be eaten by pouring hot water into the container or by pouring cold or hot water into the container and heating in a microwave, the instant food product comprising: a container; and puffed dried rice that is contained in the container and sinks in water.

Since the puffed dried rice contained in the container sinks in water, the surface of water can be seen from above even when hot or cold water is poured into the container containing the puffed dried rice, and therefore an accurate amount of hot or cold water can be poured into the container. Therefore, unlike the conventional product containing puffed dried rice, the cooking of the instant food product according to the present invention does not require the process of once taking out the separately-packed puffed dried rice from the container and the process of putting the puffed dried rice back into the container after pouring a predetermined amount of hot or cold water. Further, similarly to a common instant food product, the instant food product according to the present invention can be easily cooked by directly pouring hot or cold water into the container containing the puffed dried rice, and therefore cooking failure is less likely to occur. Further, since the puffed dried rice sinks in water, non-uniform reconstitution of the rice is less likely to occur.

The bulk specific gravity of the puffed dried rice that sinks in water is preferably 0.55 g/mL or more, particularly preferably 0.55 g/mL or more but 0.7 g/mL or less. Here, the bulk specific gravity was measured in the following manner. The puffed dried rice was put into a 100-mL graduated cylinder, the bottom of the graduated cylinder was tapped about ten times for leveling, the puffed dried rice was additionally put into the graduated cylinder up to the 100-mL mark, and then the weight of the puffed dried rice put into the graduated cylinder was measured. For example, when the weight of the puffed dried rice having a volume of 100 mL is 55 g, the bulk specific gravity of the puffed dried rice is 55/100 = 0.55. If the puffed dried rice has a bulk specific gravity of less than 0.55 g/mL, most ofthe grains of the puffed dried rice float in water.

In the present invention, the puffed dried rice contained in the container may be directly placed in the container. In the present invention, since the puffed dried rice sinks in water, the surface of water can be seen from above the container. Therefore, it is not necessary to take out the dried rice from the container before hot or cold water is poured into the container. For this reason, the puffed dried rice does not need to be separately packed in a bag, and therefore can be directly placed in the container.
This is advantageous not only in that the surface of water can be seen but also in that separate packing of the puffed dried rice can be omitted, and therefore a production process can be simplified and raw materials can be saved.

The instant food product according to the present invention is particularly preferably of a type that can be eaten simply by pouring cold or hot water and heating in a microwave. When the instant food product is cooked by heating in a microwave, the puffed dried rice is sufficiently reconstituted, and therefore can achieve a texture comparable to that of cooked rice. Further, when cooked in a microwave, the product can be kept hot during eating.

The rice-based instant food product with a container according to the present invention may further contain, in the container, dried ingredients that float in water. For example, in the case of an instant food product such as instant seasoned rice boiled with other ingredients, instant fried rice, instant pilaf, or the like, "kayaku" (ingredients), such as shrimps or vegetables, should be placed on rice after cooking in terms of appearance. In the present invention, since the puffed dried rice sinks in water, a state where "kayaku" (ingredients) is placed on the rice after cooking can be achieved as long as the "kayaku" is of a type that floats in water. As a method for producing such "kayaku" that floats in water, freeze-drying, puffing and drying with high-temperature hot air, or hot oil drying can be used.

Further, the present invention is preferably applied to an instant food product that is eaten without draining hot or cold water poured. In the present invention, the puffed dried rice contained in the container sinks in water, and therefore the surface of water can be seen even when hot or cold water is poured. For this reason, providing a waterline in the container containing the puffed dried rice makes it possible to pour an accurate amount of water without once taking out the puffed dried rice from the container. Since an accurate amount of water can be poured, water can be given to the puffed dried rice in an amount appropriate to reconstitution without the need for draining hot water. In particular, when the present invention is applied to an instant food product such as instant seasoned rice boiled with other ingredients, instant fried rice, instant pilaf, or the like that is not a soup dish, the puffed dried rice can absorb all the water poured and achieve the best reconstituted state.

It is to be noted that the puffed dried rice used in the present invention refers to porous dried rice obtained by drying gelatinized rice to adjust its moisture content and then puffing the gelatinized rice with hot air at a high temperature exceeding 100°C, and does not include so-called gelatinized rice (dried gelatinized rice) obtained by directly drying gelatinized rice with hot air at about 100°C to a moisture content of about 5 to 10 mass% without adjusting the moisture content of the gelatinized rice by drying. Unlike commercially-available so-called gelatinized rice, the puffed dried rice obtained by puffing and drying at a temperature of preferably 130°C or higher after moisture content adjustment is excellent in reconstitutability and can satisfactorily keep its original rice grain shape.

A method for producing the puffed dried rice is not particularly limited. However, from the viewpoint of high reconstitutability, the puffed rice is preferably produced by once drying gelatinized rice to adjust its moisture content, subjecting the dried rice to pressing and flattening, and then puffing the pressed flattened rice at a high temperature. More specifically, the puffed dried rice is preferably produced by subjecting cooked (boiled or steamed) rice to primary drying, subjecting the first stage dried rice to pressing and flattening, subjecting the pressed flattened rice to secondary drying, and puffing and drying the second stage dried rice at a high temperature of at least 100°C or higher, preferably 130°C or higher, more preferably 140°C or higher, preferably with high-velocity hot air or superheated steam. It is to be noted that the temperature of puffing and drying is lower than 160°C, that is, lower than all of those described in PTL 1 to PTL 4, and therefore puffed dried rice having a bulk specific gravity within the above range can be easily obtained.

The puffed dried rice used in the present invention has a high bulk specific gravity and a low puffing degree. Therefore, in order to successfully reconstitute the puffed dried rice and to achieve good texture in the mouth, sufficiently-gelatinized rice is preferably used.. The moisture content ofthe cooked (boiled or steamed) rice is preferably adjusted to be higher than that in a method for producing conventional puffed dried rice, more specifically 55 mass% or more but 65 mass% or less.

It is to be noted that it is not necessary for all the puffed dried rice contained in the instant food product according to the present invention to sink in water or have a bulk specific gravity of 0.55 g/mL or more. It is sufficient that a sample that accurately reflects the lot of the product (final product) in question or the puffed dried rice has a bulk specific gravity of 0.55 g/mL or more as measured with a 100-mL graduated cylinder in such a manner as described above. For example, in the case of the product, it is sufficient that most of all the puffed dried rice grains contained in the container sink in water. This is because all the rice grains are not puffed in exactly the same way for production reasons. Even when part of the puffed dried rice floats in water, hot or cold water can be accurately poured into the container as long as the surface of water can be sufficiently seen.

### Advantageous Effect of Invention

According to the present invention, since the puffed dried rice contained in the instant food product sinks in water, the surface of water can be seen from above even when hot or cold water is poured into the container containing the puffed dried rice, and therefore an accurate amount of hot or cold water can be poured into the container. Since an accurate amount of water can be poured, the puffed dried rice can be cooked to its optimal condition, and in addition, can be easily cooked without the need for the process of once taking out the puffed dried rice from the container before cooking.

### Description of Embodiments

Hereinbelow, one example of a method for producing puffed dried rice used for an instant food product according to the present invention will be described. This production method includes the steps of "rice cooking, moisture content adjustment, pressing and flattening, and puffing and drying at high temperature". The method for producing puffed dried rice used for an instant food product according to the present invention is not limited to the following production method as long as puffed dried rice that sinks in water, preferably puffed dried rice having a bulk specific gravity of 0.55 g/mL or more can be obtained.

First, rice as a raw material is washed and then cooked. The rice as a raw material can be used irrespective of its type or quality, and even old rice can be appropriately used. The rice cooking may be performed either by boiling using a rice cooker or by steaming using a steamer. The rice should be cooked to a texture that is the same as or slightly harder than that of cooked rice eaten in general households. More specifically, the moisture content of the cooked rice is 45 to 70 mass%, preferably about 55 to 65 mass%, more preferably 57 to 63 mass%. When the moisture content is higher, the texture is better. However, if the moisture content exceeds 65 mass%, sticking between the grains of the cooked rice is likely to occur. As a result, the cooked rice is difficult to loosen, and is therefore likely to be unevenly dried or puffed.

In the case of puffed dried rice disclosed in PTL 2 or commercially-available puffed dried rice, rice is cooked to a very hard texture from the viewpoint of preventing sticking. However, in the present invention, the moisture content of the cooked rice is preferably set to be higher than that in a method for producing such conventional puffed dried rice. It is to be noted that an additive such as an emulsifier, a surfactant, or oil or fat may be added to the washed rice before boiling or steaming the rice to make it easier to loosen the cooked rice in the subsequent step. In the case of seasoned rice such as pilaf, seasoning may be performed by adding a liquid seasoning before or after the rice cooking.

Then, the cooked rice is preferably loosened so as not to become firm. Loosening the cooked rice makes it possible to evenly dry the cooked rice to obtain dried rice having a good texture. The cooked rice can be loosened by a mechanical method using a known rotary vane-type paddle or a method using air. In the present invention, the amount of water added to the rice before cooking is large, and therefore the cooked rice is preferably sufficiently loosened.

After the cooked rice is loosened, the moisture content of the cooked rice is adjusted by primary drying to bring the cooked rice to a state where the cooked rice can be subjected to pressing and flattening. The primary drying should be performed by ventilation at 100°C or lower until the cooked rice is dried to a moisture content of 20 mass% or more but 30 mass% or less, particularly preferably 22 mass% or more but 28 mass% or less. Drying the cooked rice to a moisture content within the above range makes it possible to bring the cooked rice to a state where the grains of the cooked rice are not broken even by pressing and flattening.

After the moisture content is adjusted by primary drying, the cooked rice is subjected to pressing and flattening. The pressing and flattening can be most simply performed by passing the grains of the cooked rice through a narrow gap between rolls, but may be performed by pressing the cooked rice with a pressing machine or a grinding machine. When the cooked rice is pressed and flattened using rolls, the gap between the rolls should be about 0.1 to 1 mm. However, the gap between the rolls pressing the cooked rice is particularly preferably 0.20 mm or more but 0.60 mm or less. The cooked rice may be subjected to pressing and flattening twice or more. By subjecting the cooked rice to pressing and flattening, tissue destruction occurs in the grains of the cooked rice so that the cooked rice is easily puffed due to the tissue destruction. The cooked rice is more easily puffed when more strongly pressed and flattened. However, in the present invention, the gap between the rolls is particularly preferably 0.25 mm or more but 0.45 mm or less to achieve a better texture.

After the cooked rice is pressed and flattened in such a manner as described above, the moisture content of the first stagefirst stage dried rice is adjusted by further performing secondary drying before puffing and drying. The secondary drying is performed to adjust the moisture content of the first stagefirst stage dried rice to achieve an appropriate puffed state. Similarly to the first stage drying, the secondary drying should be performed by ventilation at 100°C or lower. The secondary drying should be performed until the moisture content of the dried rice (second stage dried rice) after drying becomes 10 mass% or more but 25 mass% or less, more preferably 12 mass% or more but less than 18 mass%. After the completion of the secondary drying, the second stage dried rice is preferably sieved, and is then puffed and dried at a high temperature exceeding 100°C.

The second stage dried rice can be puffed and dried using a high-temperature hot air drier for drying or baking food. The temperature in the chamber of the drier is set to a high temperature exceeding 100°C. In order to sufficiently puff the second stage dried rice to achieve excellent reconstitutability, the temperature in the chamber is preferably 130°C or higher, more preferably 140°C or higher. In the present invention, the second stage dried ricesecond stage dried rice is puffed so that the puffed rice sinks in water, preferably the bulk specific gravity of the puffed rice is adjusted to 0.55 g/mL or more. In order to puff the second stage dried ricesecond stage dried rice to achieve a bulk density within such a range, the degree of puffing is adjusted by controlling temperature, time, air velocity, etc.

However, when the puffing is performed at a very high temperature in a short time, there is a problem that the second stage dried rice is likely to be extremely puffed and therefore the puffed rice has a low bulk specific gravity or the second stage dried rice is likely to be unevenly puffed or insufficiently dried. For this reason, when the second stage dried rice is puffed and dried using a high-velocity hot air drier, the temperature of the puffing and drying is preferably lower than those used in the techniques disclosed in PTL 1 to PTL 4 or that used to produce commercially-available puffed dried rice, more preferably lower than 160°C.

In order to heat the second stage dried rice to a high temperature at once to evenly puff the second stage dried rice, the second stage dried rice is preferably puffed and dried by, for example, blowing high-velocity and high-temperature airflow having an air velocity of 40 m/s or more and a temperature exceeding 100°C onto the grains of the second stage dried rice. At this time, saturated steam may be supplied into the chamber of the high-temperature air drier to increase the amount of energy applied to the rice. Alternatively, the second stage dried rice may be puffed by blowing superheated steam instead of high-velocity and high-temperature airflow.

The time of the puffing and drying greatly varies depending on temperature, air velocity, or the amount of the rice, and therefore needs to be appropriately adjusted. Broadly speaking, the time of the puffing and drying is about 30 seconds to 2 minutes. In this way, the second stage dried rice should be puffed and dried to a final moisture content of about 5 mass% or more but 12 mass% or less so that the bulk specific gravity of the puffed dried rice is preferably 0.55 g/mL or more, more preferably 0.6 g/mL or more.

The puffed dried rice used in the present invention is produced in, for example, the above manner, and has the property of sinking in water. Such puffed dried rice, preferably a predetermined amount of the puffed dried rice is directly put into a container, and if necessary, "kayaku" (ingredients) or dried soup is directly put into the container or packed in an attached bag and placed in the container. Then, the container is sealed to provide an instant rice food product (final product) with the container. "Kayaku" (ingredients) or soup can be directly put into the container by preparing it in dry form. Such dried ingredients or dried soup directly put into the container can be produced by a known drying method such as freeze-drying, hot-air drying, or fluidized-bed drying. In particular, when the dried "kayaku" (dried ingredients) floats in water, the rice is on the lower side and the "kayaku" (ingredients) is placed on the rice after cooking, and therefore the instant food product is excellent in appearance. Even when floating in water, the "kayaku" does not cover all the waterline provided in the container as long as the amount of the "kayaku" is small, and therefore an accurate amount of water can be poured.

The container may be a stiff cup- or bowl-like container such as a container for cup noodle, but may be a soft packaging-type container such as a standing pouch. The waterline indicating the amount of water necessary for reconstitution and cooking is provided inside the container, but may be provided outside the container when the container is transparent. In the case of a seasoned rice-type product such as seasoned rice boiled with other ingredients or fried rice, seasoning may be performed after cooking the rice or before drying the cooked rice. Alternatively, seasoning may be performed with attached seasoning oil or soup at the end of cooking, that is, before or after pouring hot water or cooking in a microwave.

The instant food product containing puffed dried rice according to the present invention may be a product that can be eaten simply by pouring hot water and waiting for several minutes. The instant food product containing puffed dried rice according to the present invention may be a product that is cooked in a microwave. In this case, the product is kept hot during eating, and in addition, the puffed dried rice is easily and sufficiently reconstituted.

As described above, the puffed dried rice has the property of sinking in water, and therefore an accurate amount of water can be poured. Therefore, the instant food product is most preferably applied to a dish that is not a soup dish, especially a dish that does not require draining hot water after cooking, such as white rice (cooked rice), seasoned rice boiled with other ingredients, fried rice, pilaf, curry and rice, chicken pilaf, steamed glutinous rice with azuki beans, seasoned glutinous rice steamed with other ingredients, or risotto. However, the instant food product may be applied to a dish requiring draining hot water. Therefore, instant soup dishes such as rice porridge with other ingredients, rice porridge, and rice with tea poured on it, and instant rice-bowl dishes such as rice bowl dish topped with simmered chicken and egg and rice bowl dish topped with stir-fried vegetables, meat, seafood, etc. can be provided.

The thus produced instant food product with a container which contains puffed dried rice is cooked and eaten in the following manner. First, the container is opened, and hot or cold water is poured up to a waterline provided inside the container through an opening. When the product is of the above type that can be eaten simply by reconstituting it with hot water, the product is reconstituted and cooked by pouring hot water and then waiting for a several minutes. On the other hand, when the product is ofthe above type that is cooked in a microwave, the product is cooked by pouring hot or cold water and heating in a microwave for several tens of seconds to several minutes before eating.

The instant food product according to the present invention is excellent in storage stability, and therefore may also be used as stockpiled rice in case of disasters. In this case, the puffed dried rice may be packed not in an individual container but in a large-capacity container.

### <Examples>

Hereinbelow, the present invention will be specifically described with reference to Examples and Comparative Example.

### <Comparative Example 1> (Production Example of Conventional Product)

Non-glutinous polished white rice of 700 g was washed and drained, and then emulsified oil, a sucrose fatty acid ester, and polyphosphate were added thereto at rates of 14 g/kg, 3 g/kg, and 0.3 g/kg, respectively, and uniformly mixed with the polished white rice. Then, water was added thereto in an amount of 85 mass% of the rice, and the rice was cooked for 15 minutes in a rice cooker (gas rice cooker RR-10KS manufactured by Rinnai Corporation). Then, the rice was steamed for 20 minutes to obtain cooked rice whose moisture content after cooking was 50%. The cooked rice was cooled by blowing air over it and loosened.

The loosened cooked rice was placed in a drying chamber and subjected to primary drying for 25 minutes under conditions of 80°C and an air velocity of 3 to 4 m/s to dry it to a moisture content of 26 mass%. The first stage dried rice was allowed to stand for 30 minutes after the primary drying, and was then sieved to remove very sticky lumps of rice. Further, the first stage dried rice was pressed and flattened by passing it through a 0.35 mm gap between rolls. The pressed flattened rice was placed in the drying chamber and subjected to secondary drying for 15 minutes under conditions of 80°C and an air velocity of 3 to 4 m/s to dry it to a moisture content of 16 mass%.

The second stage dried rice was allowed to stand for 30 minutes after the secondary drying, and was then placed in a high-temperature air drier, which can spray high-temperature airflow at a high velocity, and puffed and dried for 30 seconds under conditions of 190°C and an air velocity of 50 m/s. The rice was puffed by this puffing and drying so that puffed rice having a moisture content of about 8 mass% was obtained. The puffed dried rice was sieved to remove broken rice grains and non-puffed rice grains. The bulk specific gravity of the puffed rice remaining after the sieving was measured in such a manner as described above and found to be 0.43 g/mL.

### <Example 1> (Example Involving Puffing and Drying with High-Temperature and High-Velocity Air Drier)

Puffed dried rice having a bulk specific gravity of 0.60 g/mL was obtained in the same manner as in Comparative Example 1 except that the amount of water added before rice cooking was increased to increase the moisture content of the cooked rice and that the temperature during puffing and drying was reduced to lower than 160°C and the second stage dried rice was puffed and dried while steam was blown into the drying chamber.

More specifically, non-glutinous polished white rice of 700 g was washed and drained, and then emulsified oil, a sucrose fatty acid ester, and polyphosphate were added thereto at rates of 16 g/kg, 3 g/kg, and 1.8 g/kg, respectively, and uniformly mixed with the polished white rice. Then, water was added thereto in an amount of 140 mass% ofthe rice, and the rice was cooked for 15 minutes in a rice cooker (gas rice cooker RR-10KS manufactured by Rinnai Corporation). Then, the rice was steamed for 20 minutes to obtain cooked rice whose moisture content after cooking was 60%. The cooked rice was loosened while air was blown over it.

The loosened cooked rice was placed in a drying chamber and subjected to primary drying for 35 minutes under conditions of 80°C and an air velocity of 3 to 4 m/s to dry it to a moisture content of 26 mass%. The first stage dried rice was allowed to stand for 30 minutes after the primary drying, and was then sieved to remove very sticky lumps of rice. Further, the first stage dried rice was pressed and flattened by passing it through a gap between rolls twice; the first time, the gap was 0.35 mm and the second time, the gap was 0.40 mm.

The pressed flattened rice was placed in the drying chamber and subjected to secondary drying for 15 minutes under conditions of 80°C and an air velocity of 3 to 4 m/s to dry it to a moisture content of 16 mass%. The second stage dried rice was allowed to stand for 30 minutes after the secondary drying, and was then placed in a high-temperature and high-velocity air drier, and puffed and dried for 60 seconds under conditions of 146°C and an air velocity of 55 m/s while saturated steam was supplied at 0.5 MPa. The rice was puffed by this puffing and drying so that puffed rice having a moisture content of 8 mass% was obtained. The puffed dried rice was sieved to remove broken rice grains and non-puffed rice grains. The bulk specific gravity of the puffed rice remaining after the sieving was measured in such a manner as described above and found to be 0.60 g/mL.

### <Test Methods>

### (1. Evaluation of Sinking)

The puffed dried rice of 30 g produced in Comparative Example 1 or Example 1 was placed in a glass cup having an opening of about 7 cm, and 100 mL of water was poured into the glass cup and allowed to stand for about 10 seconds. Then, the glass cup was observed from above to determine whether or not the surface of water could be seen. Further, the glass cup was observed from its side to determine whether or not the rice sank in water.

### (2. Sensory Evaluation)

The puffed dried rice of 90 g produced in Comparative Example 1 or Example 1 was placed in a cup-like container, and was mixed with 7.2 g of powdered soup, 3 g of dried egg, 2.5 g of freeze-dried pork, 1.3 g of freeze-dried shrimp, and 0.9 g of dried green onion. Then, 160 mL of water at 25°C was added to the cup-like container, and the cup-liked container was loosely covered and heated in a microwave (output: 500 W) for 5 minutes and 30 seconds and then steamed for 1 minute. The cup-like container was taken out ofthe microwave, and the contents were well mixed to make fried rice. Five panelists ate the fried rice and evaluated the texture of rice according to the following criteria scored on a scale of 1 to 5. The most common score was given to the sample.

1: The sample is significantly inferior in texture to common cooked rice and cannot be eaten.
2: The sample can be eaten, but is quite inferior in texture to common cooked rice and has no commercial value.
3: The sample is inferior in texture to common cooked rice, but can be satisfactorily eaten and has a commercial value.
4: The sample is slightly inferior in texture to common cooked rice, but is very good as instant cooked rice.
5: The sample is comparable to common cooked rice.

As a result of the evaluation of sinking, most of the grains of the rice produced in Comparative Example 1 floated in water and therefore the surface of water could not be seen, whereas some of the grains of the rice produced in Example 1 floated in water, but most of them sank in water, and therefore the surface of water could be clearly seen. As a result of the sensory evaluation, both the fried rice of Comparative Example 1 and the fried rice of Example 1 absorbed all the water poured with no water remaining in the container, and were rated 5, or excellent.

In the sensory evaluation, the fried rice of Example 1 was cooked without using a microwave by pouring 160 mL of hot water at 100°C instead of water at 25°C, covering the container, and waiting for 6 minutes and 30 seconds before eating. In this case, the puffed dried rice absorbed water but had a slightly hard core remaining in it, and was therefore slightly poor in texture. However, it seemed that the sample could be satisfactorily improved in texture by waiting for a longer time or by pouring a larger amount of hot water and then draining hot water, and therefore could have a commercial value.

### <Experiment 1: Examination of Bulk Density>

The temperature of the puffing and drying in Example 1 was changed as shown in Table 1 to produce different specific gravities of puffed dried rice. The air velocity, the exposure time, the method for evaluating sinking, the method for measuring bulk specific gravity, and the sensory evaluation method were the same as those described in Example 1 and above.

**[Table 1]**

| Puffing Temperature °C | Bulk Specific Gravity g/mL | Evaluation of Sinking | Sensory Evaluation |
|---|---|---|---|
| 133 | 0.75 | Most of the rice grains sink. | 3 |
| 137 | 0.7 | Most of the rice grains sink. | 4 |
| 141 | 0.65 | A few of the rice grains float, but the surface of water can be easily seen. | 4 |
| 146 | 0.6 | Some of the rice grains float, but the surface of water can be easily seen. | 5 |
| 151 | 0.55 | Some of the rice grains float, but the surface of water can be seen. | 5 |
| 155 | 0.5 | Many of the rice grains float, and therefore the surface of water cannot be seen. | 5 |
| 160 | 0.45 | Many of the rice grains float, and therefore the surface of water cannot be seen. | 5 |

As can be seen from the evaluation results shown in Table 1, when the bulk specific gravity was 0.55 or more, the surface of water can be seen from above the cup, and therefore the surface of water can be seen during pouring of hot or cold water. The bulk specific gravity was preferably 0.7 or less in terms of texture. Further, the bulk specific gravity was particularly preferably 0.55 to 0.65 g/mL in terms of both aspects.

### <Experiment 2: Examination for Achieving the Same Bulk Specific Gravity>

From the results of Experiment 1, the best bulk density ofthe puffed dried rice was regarded as 0.6 g/mL. Therefore, an examination was made as to whether or not puffed dried rice having such a specific gravity could be produced even by changing the temperature of puffing and drying (the temperature of drying with high-temperature and high-velocity airflow). Further, such puffed dried rice produced by changing the temperature of puffing and drying was subjected to a sensory test to determine whether or not its texture was as preferable as that of the puffed dried rice produced in Example 1. More specifically, the temperature of puffing and drying was gradually reduced from 160°C while the air velocity was increased, and as a result of repetition of trial and error, conditions under which puffed dried rice whose bulk specific gravity measurement result was 0.6 g/mL could be produced were found. As in the case of Experiment 1, the sensory evaluation was made using fried rice cooked in a microwave. The results are shown in Table 2.

**[Table 2]**

| Puffing Temperature °C | Air Velocity m/s | Bulk Specific Gravity g/mL | Sensory Evaluation |
|---|---|---|---|
| 154 | 41 | 0.6 | 5 |
| 146 | 55 | 0.6 | 5 |
| 143 | 70 | 0.6 | 5 |
| 141 | 83 | 0.6 | 5 |
| 139 | 92 | 0.6 | 5 |

As shown in Table 2, the bulk specific gravity could be adjusted to 0.6 g/mL by controlling the air velocity even when the temperature of puffing and drying was changed from the 130s°C to the 150s°C. It was confirmed that in any of the cases, the result of sensory evaluation of fried rice was excellent.

### <Example 2> (Example Involving Puffing and Drying with Superheated Steam)

Second stage dried rice obtained by performing pressing and flattening and then secondary drying in the same manner as in Example 1 was puffed and dried using superheated steam instead of the high-temperature and high-velocity air drier used in Example 1. More specifically, superheated steam at 400°C generated by a superheated steam generator was introduced at a flow rate of 20 kg/h into the chamber of a superheated steam drier for drying powdered soup. The superheated steam drier had an impeller inside its chamber. The temperature in the chamber was adjusted to 165°C, and the second stage dried rice was placed in the chamber. The second stage dried rice was puffed by heating for 64 seconds while stirred with the impeller. The temperature in the chamber after 64 seconds was 185°C. The puffed dried rice was sieved to remove broken rice grains and non-puffed rice grains. The bulk specific gravity of the puffed rice remaining after the sieving was measured in such a manner as described above and found to be 0.6 g/mL.

The puffed dried rice of Example 2 was cooked in the same manner as in Example 1 and then eaten. As a result ofthe sensory evaluation, the puffed dried rice was rated 5, or excellent. The fried rice using the puffed dried rice produced in Example 1 and the fried rice using the puffed dried rice produced in Example 2 were compared in more detail. As a result, the fried rice using the puffed dried rice produced using superheated steam in Example 2 was felt slightly superior in texture, but the puffed dried rice produced by drying with high-temperature and high-velocity airflow in Example 1 was felt slightly superior in terms of uniformly puffing the second stage dried rice.

## Claims

1. An instant food product that is packed in a container and can be eaten by pouring hot water into the container or by pouring cold or hot water into the container and heating in a microwave, the instant food product comprising: a container; and puffed dried rice that is contained in the container and sinks in water.

2. The instant food product according to claim 1, wherein the puffed dried rice has a bulk specific gravity of 0.55 g/mL or more.

3. The instant food product according to claim 1 or 2, wherein the puffed dried rice contained in the container is directly placed in the container.

4. The instant food product according to any one of claims 1 to 3, which is eaten without draining hot or cold water poured before eating.

5. The instant food product according to any one of claims 1 to 4, wherein the puffed dried rice is prepared by adjusting a moisture content of boiled or steamed rice and then puffing and drying the rice at 130°C or higher.
